# EUROPÄISCHE PATENTANMELDUNG

(11) **EP 4 401 290 A1**
(43) Veröffentlichungstag der Anmeldung: **17.07.2024**
(21) Anmeldenummer: 23150955.5
(22) Anmeldetag: 10.01.2023
(51) Int. Cl.: H02K 17/16, H02K 15/00

(54) **VERFAHREN ZUR HERSTELLUNG EINES KURZSCHLUSSLÄUFERS**

(71) Anmelder: Siemens Aktiengesellschaft, 80333 München (DE)
(72) Erfinder: Brandl, Konrad, 93107 Thalmassing (DE); Deim, Sybille, 90475 Nürnberg (DE); Krompasky, Erik, 25216 Nucice (CZ); Rauch, Hartmut, 12203 Berlin (DE)
(74) Vertreter: Siemens Patent Attorneys

(57) **Zusammenfassung**

Die Erfindung betrifft ein Verfahren zur Herstellung eines Kurzschlussläufers (10) einer dynamoelektrischen Maschine (1), insbesondere einer Asynchronmaschine durch folgende Schritte,
- drehfestes Positionieren eines zylindrischen magnetisch leitfähigen Körpers, insbesondere eines Blechpaketes (22), mit am äußeren Umfang versehenen im Wesentlichen axial verlaufenden Nuten (30), auf einer Welle (17),
- Einsetzen von Leiterstäben (11) in die Nuten (30), derart, dass sich an den beiden Stirnseiten (31) des zylindrischen magnetisch leitfähigen Körpers axiale Überstände (32) der Leiterstäbe (11) ergeben,
- koaxiales Positionieren eines, in radialer Richtung zumindest zweiteiligen, insbesondere dreiteiligen Kurzschlussringes (12) auf der Welle (17) in jeweils einem vorgebbaren axialen Abstand (16) zur Stirnseite (31) des magnetisch leitfähigen Körpers,
- elektrisches Kontaktieren des Kurzschlussringes (12) mit den jeweils aus den Stirnseiten (31) des magnetisch leitfähigen Körpers ragenden axialen Überständen (32) der Leiterstäbe (11).

## Beschreibung

Die Erfindung betrifft ein Verfahren zur Herstellung eines Kurzschlussläufers einer dynamoelektrischen rotatorischen Maschine, insbesondere einer Asynchronmaschine, einen Kurzschlussläufer, eine dynamoelektrische rotatorische Maschine, insbesondere eine Asynchronmaschine, mit einem derartigen Kurzschlussläufer, als auch die Verwendung einer derartigen dynamoelektrischen rotatorischen Maschine, insbesondere einer Asynchronmaschine.

Bei dynamoelektrischen rotatorischen Maschinen, insbesondere Käfigläufer-Asynchronmaschinen, wird meist in einem Rotor, der relativ zu einem Stator drehbar gelagert ist, ein sogenannter Kurzschlusskäfig vorgesehen. Der Rotor der Asynchronmaschine wird daher auch als Käfigläufer oder Kurzschlussläufer bezeichnet. Der Kurzschlusskäfig weist Kurzschlussstäbe auf, die im Allgemeinen achsparallel oder leicht schräg zu der Rotationsachse des Käfigläufers, d.h. in Axialrichtung verlaufend angeordnet sind.

Die Kurzschlussstäbe sind in den Rotorgrundkörper eingefügt, der meist als Lamellenpaket aus einer Vielzahl von axial hintereinander gestapelten Blechlamellen gebildet wird.

Die Kurzschlussstäbe sind in Ausnehmungen oder Nuten des Blechpakets positioniert. An ihren Enden, die axial aus den Stirnseiten des Blechpakets ragen, sind diese axialen Überstände der Kurzschlussstäbe durch Kurzschlussringe, welche an beiden stirnseitigen Enden des Rotorgrundkörpers angeordnet sind, elektrisch leitend miteinander verbunden.

Ein derartiger Kurzschlussläufer einer Asynchronmaschine ist beispielsweise in der DE 195 42 962 C1 beschrieben.

Während des Betriebs der dynamoelektrischen Maschine werden in dem Kurzschlusskäfig aufgrund variierender Magnetfelder starke Ströme induziert. Um deren Widerstandsverluste gering zu halten, besteht der Kurzschlusskäfig im Allgemeinen aus einem Material mit hoher elektrischer Leitfähigkeit, wie beispielsweise aus Kupfer und/oder Aluminium und/oder einer Legierung mit diesen Materialien.

Allerdings weisen diese genannten Materialien eine verhältnismäßig geringe mechanische Festigkeit gegenüber Fliehkraftbeanspruchungen auf.

Bei hohen Umfangsgeschwindigkeiten des Rotors, neigen daher die Komponenten des Kurzschlusskäfigs, insbesondere die freiliegenden Kurzschlussringe dazu, sich aufgrund von Fliehkräften in radialer Richtung zu verformen. Dabei können auch die Bleche an den Stirnseiten des Rotors im Bereich der Nutschlitze aufgebogen werden oder gar einreißen.

Aufgrund der im Betrieb der dynamoelektrischen Maschine häufig vorkommenden hohen Temperaturen kann sich die Festigkeit dieser Komponenten weiter verringern, was die Deformationstendenzen zusätzlich verstärkt.

Um Deformationen der Kurzschlussringe zu vermeiden, werden diese herkömmlich auch durch umfänglich verlaufende Kappenringe gestützt.

In der DE 10 2014 220 267 A1 wird daher vorgeschlagen, die mechanisch wenig stabilen Kurzschlussringe des Kurzschlusskäfigs gegen radiale Deformationen beispielsweise aufgrund bei hohen Drehzahlen auftretender starker Fliehkräfte mittels Stützscheiben zu schützen, welche ähnlich wie eine Decklamelle an einer Stirnfläche des Lamellenpakets angeordnet werden können und welche mit einem axial weg von dem Lamellenpaket umgebogenen randnahen Bereich den Kurzschlussring stabilisieren können.

Aus der EP 3 823 142 A1 ist ein Kurzschlussläufer bekannt, bei dem zur Aufnahme der Fliehkräfte radial innerhalb der Kurzschlussringe ein Stützelement aus hochfestem Material vorgesehen ist, das mit dem Kurzschlussring zumindest abschnittsweise stoffschlüssig verbunden ist.

In anderen Ausführungsformen des Kurzschlussrings bei kleineren Maschinen werden die Leiterstäbe nicht an die Kurzschlussringe angelötet. Bei vergleichsweise kleineren Maschinen werden die Kurzschlusskäfige, also Leiterstäbe und die stirnseitigen Kurzschlussringe auch im Druckgussverfahren aus einem Teil gefertigt.

Der Kurzschlussring übernimmt dabei nicht nur die Stromübertragung zwischen den einzelnen Stäben, sondern muss auch die Fliehkräfte der Stabüberstände aufnehmen.

Aber auch hier übernimmt der Kurzschlussring die stromübertragende und stützende Funktion. Dabei müssen diese Funktionen in einem Material zusammengefasst werden. Somit wären Abstriche bei der elektrischen Leitfähigkeit oder der mechanischen Festigkeit hinzunehmen.

Die aufgeführten Maßnahmen erhöhen Kosten und Komplexität bei der Herstellung eines Rotors einer Käfigläufer-Asynchronmaschine oder sind bei größeren Leistungen bzw. Achshöhen des Rotors nicht mehr wirtschaftlich umsetzbar.

Der Erfindung liegt daher die Aufgabe zugrunde, einen Rotor, insbesondere einer Käfigläufer-Asynchronmaschine, zu schaffen, der für hohe Drehzahlen von Käfigläufer-Asynchronmaschinen vor allem im industriellen Umfeld geeignet ist und vergleichsweise einfach herzustellen ist.

Die Lösung der gestellten Aufgabe gelingt durch ein Verfahren zur Herstellung eines Kurzschlussläufers einer dynamoelektrischen Maschine, insbesondere einer Asynchronmaschine durch folgende Schritte:
- Drehfestes Positionieren eines zylindrischen magnetisch leitfähigen Körpers, insbesondere eines Blechpaketes, mit am äußeren Umfang versehenen im Wesentlichen axial verlaufenden Nuten, auf einer Welle,
- Einsetzen von Leiterstäben in die Nuten, derart, dass sich an den beiden Stirnseiten des zylindrischen magnetisch leitfähigen Körpers axiale Überstände der Leiterstäbe ergeben,
- koaxiales Positionieren eines, in radialer Richtung zumindest dreiteiligen Kurzschlussringes auf der Welle in jeweils einem vorgebbaren axialen Abstand zur Stirnseite des magnetisch leitfähigen Körpers,
- elektrisches Kontaktieren des Kurzschlussringes mit den jeweils aus den Stirnseiten des magnetisch leitfähigen Körpers ragenden axialen Überständen der Leiterstäbe.

Die Lösung der gestellten Aufgabe gelingt auch durch einen erfindungsgemäßen Kurzschlussläufer einer dynamoelektrischen Maschine, insbesondere einer Asynchronmaschine, wobei die Kurzschlussringe von dem magnetisch leitfähigen zylindrischen Körper, insbesondere dem Blechpaket axial beabstandet sind, insbesondere äquidistant beabstandet sind, so dass die Kurzschlussringe mit dem magnetisch leitfähigen zylindrischen Körper keine geschlossene Mantelfläche bilden.

Die Lösung der gestellten Aufgabe gelingt auch durch eine dynamoelektrische Maschine, insbesondere Asynchronmaschine mit einem erfindungsgemäß hergestellten Kurzschlussläufer.

Die Lösung der gestellten Aufgabe gelingt auch durch Verwendung einer erfindungsgemäßen dynamoelektrischen Maschine vorzugsweise im industriellen Umfeld der Öl- und Gasindustrie, der Nahrungsmittelindustrie, der Produktionsmaschinen, beispielsweise als Lüfter, Kompressoren, Verdichter und/oder Pumpen.

Erfindungsgemäß ist der Kurschlussring einer dynamoelektrischen rotatorischen Maschinen, vorzugsweise Käfigläufer-Asynchronmaschinen mehrteilig aufgebaut. Er wird auch als Hybridkurzschlussring bezeichnet. Dabei weist der Kurzschlussring vorzugsweise konzentrische radial übereinander angeordnete Ringe auf.

Es werden erfindungsgemäß die Funktionen Stromführung und Fliehkraftaufnahme des Kurschlussringes getrennt.

Bei zwei Ringen übernimmt ein Ring die Fliehkraftaufnahme und der zweite Ring die Stromführung. Der zweite Ring des Kurzschlussrings übernimmt ausschließlich oder zumindest zum überwiegenden Anteil die Stromaufnahme, ein konzentrisch unter diesem zweiten Ring sitzender hochfester erster Ring, z.B. aus Stahl stützt nun den "Stromring" (zweiten Ring) für die Fliehkraftbeanspruchung ab.

Bei drei Ringen übernimmt der erste Ring (radial innenliegende Ring aus hochfestem Stahl) die Fliehkraftaufnahme, während ein radial äußerer Ring (dritter Ring) und ggf. ein zwischen erstem und drittem Ring befindlicher zweiter Ring - die alle koaxial angeordnet sind die Stromführung übernehmen.

Es stellen sich bei einem erfindungsgemäßen Hybridkurzschlussring folgende Vorteile ein:
Es liegt erfindungsgemäß eine Trennung der Funktionen Stromübertragung und Fliehkraftaufnahme vor, so dass die jeweiligen dafür erforderlichen Materialien optimal festgelegt werden können. Es liegen stoffschlüssige Verbindungen der Bauteile vor, so dass ein zuverlässiger Betrieb einer dynamoelektrischen Maschine gewährleistet werden kann. Der hochfeste erste Ring übernimmt die Fliehkraftaufnahme im Betrieb der dynamoelektrischen Maschine, so dass hohe Umfangsgeschwindigkeit des Kurzschlussläufers und damit auch des oder der Stromringe möglich ist. Dies kann sogar zum Entfall von sonst notwendigen Getrieben führen, was zu wesentlich kompakteren Anlagen führt.

Der erste Ring kann direkt auf der Welle positioniert sein. In diesem Fall weist der erste Ring axial verlaufende Ausnehmungen auf, um Kühlluft in den Zwischenraum zwischen Kurzschlussring und Stirnseite des magnetisch leitfähigen Körpers gelangen zu lassen.

Der erste Ring kann aber auch von der Welle beabstandet angeordnet sein.

In einer konkreten Ausführungsform liegt eine hochfeste Verbindung eines inneren Stahlringes (erster Ring) mit einem vergleichsweise dünneren äußeren Kupferring (zweiter Ring) vor.

Diese stoffschlüssige Verbindung wurde dabei beispielsweise mit dem Verfahren "EXP Welding (explosion welding)" also dem Sprengplattieren hergestellt.

Bei dem Sprengplattieren wird auf den hochfesten Stahlring ein Kupferring aufgesprengt.

Dies kann einzeln pro Kurzschlussring geschehen. Es ist aber auch denkbar, ein Kupferrohr mit einem Stapel Stahlringe mittels Sprengung zu verbinden, um dann anhand der vorgegebenen axialen Abmessungen der Stahlringe, das aufgesprengte Kupferrohr abzutrennen, um damit aus einem Sprengvorgang eine vorgebbare Anzahl Kurzschlussringe zu erhalten.

Mit dem EXP-Welding wird beispielsweise ein äußeres Kupferrohr mit einer vorgebbaren Materialstärke von einigen Millimetern bis zu wenigen Zentimetern, vorzugsweise eine max. Materialstärke von ca. 15 mm (10 mm nach Endbearbeitung) sprengplattiert.

Beim Sprengplattieren wird ein Sprengstoff als gleichmäßige, flächige Schicht aufgetragen. Die Art des Sprengstoffes (Detonationsgeschwindigkeit, etc.) und der Grad der Verdämmung richtet sich nach den zu verarbeitenden Materialien und deren Gestaltung. Meist werden Sprengstoffe mit Detonationsgeschwindigkeiten von 2000 bis 5000m/s verwendet. Die Zündung der Sprengladung(en) erfolgt entweder aus dem Zentrum über dem Objekt oder vom Rand von mindestens zwei Seiten (genaue Abbildung der Unterseitenstruktur).

Vor allem werden teure korrosions- und/oder hitzebeständige Werkstoffe in dünner Schicht auf dickere preiswertere Kohlenstoffstähle einseitig oder auch beidseitig aufgebracht. Vorteil ist die physikalische feste Bindung der Plattierungspartner (erster Ring und zweiter Ring) ohne Gefügeveränderung und ausgeprägte metallurgische Mischungs- und Wärmeeinflusszonen, wie sie z.B. beim Plattieren durch Auftragsschweißung auftreten. Durch das Sprengplattieren lassen sich sonst schwer zu fügende Metalle, wie z.B. Aluminium mit Stahl, Kupfer mit Stahl etc. sicher verbinden. Die aufgesprengte Plattierung widersteht chemischer Korrosion und/oder der Hitzeeinwirkung, der Stahlring trägt die mechanischen Belastungen, insbesondere Fliehkraftbeanspruchungen im Betrieb der dynamoelektrischen rotatorischen Maschine.

Damit besteht der Hybridkurzschlussring in dieser Ausführungsform aus drei konzentrischen Ringen unterschiedlicher Materialien, die jeweils durch verschiedene bekannte Technologien stoffschlüssig miteinander verbunden wurden.

So sind zur Herstellung einer stoffschlüssigen, hochfesten Verbindung neben dem Sprengplattieren auch noch weitere Technologien zum Aufbau eines des Kurzschlussringes mit einem hochfesten ersten Ring denkbar, wie z.B. MELD (Additive Friction Stir Deposition-Technology), WEBAM (Wire Electron Beam Additive Manufactoring), LMD (Laser Metal Deposition), Cold-Spray, Galvanisierung, Kleben, Löten und Schweißen.

Unter einer stoffschlüssigen Verbindung sind erfindungsgemäß Verbindungen zu verstehen, bei denen die Verbindungspartner durch atomare oder molekulare Kräfte, (also intermolekulare oder chemische Bindungskräfte) zusammengehalten werden. Sie sind gleichzeitig nicht lösbare Verbindungen, die sich nur durch Zerstörung der Verbindungsmittel trennen lassen. Gegebenenfalls tritt zusätzlich eine mechanische "Verhakung" der Verbindungspartner ein, die einen zusätzlichen Kraftschluss bewirkt.

Das Cold Spray-Verfahren, auch als Kaltgasspritzen bekannt, ist ein an sich bekanntes Beschichtungsverfahren, bei dem ein Beschichtungswerkstoff in Pulverform mit vergleichsweise sehr hoher Geschwindigkeit der Partikel auf ein Trägermaterial, das Substrat, z.B. den ersten Ring oder zweiten Ring aufgebracht wird. Dazu wird ein auf wenige hundert Grad aufgeheiztes Prozessgas, wie Stickstoff oder Helium durch Expansion auf Überschallgeschwindigkeit beschleunigt und dabei die Partikel des Pulvers in den Gasstrahl injiziert. Diese injizierten Spritzpartikel werden dabei auf eine so hohe Geschwindigkeit beschleunigt, dass sie im Gegensatz zu anderen thermischen Spritzverfahren auch ohne vorangehendes An- oder Aufschmelzen beim Aufprall auf das Substrat eine dichte und fest haftende Schicht bilden. Die kinetische Energie zum Zeitpunkt des Aufpralls reicht dabei für ein vollständiges Aufschmelzen der Partikel nicht aus.

Galvanisierung bezeichnet grundsätzlich die elektrochemische Abscheidung metallischer Niederschläge, also von Überzügen auf Werkstücken in einem elektrolytischen Bad.

Bei der Galvanik wird elektrischer Gleichstrom durch ein elektrolytisches Bad geleitet. Am Pluspol (Anode) ist ein Metall (Kupfer oder Nickel), welches aufgelöst und dann zum Minuspol (Kathode) transferiert wird. Die im elektrolytischen Bad gelösten Metallionen lagern sich durch chemische Reduktion auf dem Werkstück ab, das mit dem Minuspol elektrisch verbunden ist und somit als Kathode dient.

Alternativ sind die Metallionen bereits im Elektrolyt als Lösung enthalten. Die Metallionen lagern sich vergleichsweise gleichmäßig auf dem Werkstück am Minuspol ab und die Schichtdicke nimmt mit der Zeit zu.

Das Elektroplattieren dient der Herstellung metallischer Überzüge auf ausgewählten Substratkörpern, also z.B. zweiter Ring auf erstem Ring.

Mittels Galvanoformung - einem weiteren Bereich der Galvanotechnik - lassen sich auch größere Schichtdicken, z.B. von Kupfer auf Stahl herstellen.

Beim so genannten Elektronenstrahlschweißen wird der im Hochvakuum erzeugte Strahl über mehrere Druckstufen durch Löcher an die Atmosphäre gelassen ("ausgefädelt"), so dass ein zu bearbeitendes Werkstück, z.B. der erste Ring, nicht in einer Vakuumkammer angeordnet werden muss.

Während der Elektronenstrahl im Vakuum wenig oder nicht an Restgasmolekülen gestreut wird (es sind dabei Arbeitsabstände von bis zu 2m möglich), kollidieren die austretenden Elektronen mit den Partikeln der dichten Atmosphäre, wodurch sie stark gestreut werden. Abhängig von der zurückgelegten Strecke verringert sich die Leistungsdichte des Strahls. Arbeitsabstände zwischen 5mm und 30mm sind jedoch noch möglich, so dass Tiefschweißen möglich ist. Die Strahlleistungen betragen beispielsweise bis 30kW.

Durch den leicht verbreiterten Strahl besteht nunmehr die Möglichkeit, merkliche Bauteil- und Prozesstoleranzen zu überbrücken (Position, Abstand, Kantenversatz, Fügespalt usw.), was insbesondere bei größeren Komponenten vorteilhaft ist. Über der Schweißstelle bildet sich eine Fackel aus Metalldampfplasma - welche das flüssige Schweißgut schützt - dieses Plasma wird vom Elektronenstrahl praktisch unbehindert (ohne Absorption) durchdrungen.

Das Elektronenstrahlschweißen unter Atmosphärendruck ermöglicht schnell bewegte, fortlaufende Schweißnähte.

Eine Leistungsdichteänderung - bei gegebener Strahlleistung - ist über den Arbeitsabstand des Strahls zum jeweiligen Arbeitspunkt möglich. Prozessparameter sind demnach die Strahlleistung, der Arbeitsabstand und der Vorschub.

Erfindungsgemäß kann jedes Bauteil (erster Ring, zweiter und dritter Ring) nach der für die Funktion optimalen Materialeigenschaft ausgewählt werden. Für die Stromübertragung (dritter und/oder zweiter Ring) werden Materialen mit definierter, meist hoher elektrischer Leitfähigkeit, wie z.B. Kupfer oder Aluminium oder deren Legierungen, verwendet. Die Fliehkraftbeanspruchung (erster Ring) übernehmen hingegen Bauteile mit sehr hoher mechanischer Festigkeit, wie z.B. Stahl oder dessen Legierungen.

Die aus dem Rotorblechpaket ragenden Leiterstäbe haben je nach Maschinenleistung eine Höhe von z.B. 30 bis 50mm. Damit ist ggf. auf den sprengplattieren Kupferring (zweiter Ring) ein zusätzlicher Kupferring mit einer Höhe von z.B. 20 bis 40mm aufzusetzen, um eine elektrisch gut leitfähige Verbindung/Kontaktierung der Leiterstäben zum Kurzschlussring zu erhalten. Hierfür eignet sich beispielsweise neben den anderen aufgeführten Verfahren zur Verbindung das EBW-Verfahren (Electron Beam Welding).

Nach dem die Leiterstäbe in den magnetisch leitfähigen Körper eingesetzt wurden und die Kurzschlussringe bereitgestellt sind, werden die Leiterstäbe bzw. Kurzschlussstäbe direkt an die elektrisch leitfähigen Ringe des Kurzschlussringes (einen z.B. aus Kupfer aufweisenden Kurzschlussring) elektrisch kontaktiert, insbesondere angelötet, mittels Silber- oder Phosphorlot oder angeschweißt.

Die Stromübertragung und die Fliehkraftaufnahme im Betrieb der dynamoelektrischen rotatorischen Maschine sind damit in einem mehrteilig aufgebauten Kurzschlussring kompakt zusammengefasst.

Vorteilhafterweise weist der Kurzschlussläufer mit seinen Kurzschlussringen und Leiterstäben stoffschlüssige, hochfeste Anbindungen unterschiedlicher Bauteile (Ringe, Leiterstäbe und deren Kontaktierungen) auf.

Es sind auch Ausführungsformen eines Kurzschlussringes mit mehr als zwei oder drei Teilen bzw. Ringen vorstellbar. Beispielsweise könnte ein radial äußerer Kappenring/Tragring, ebenfalls stoffschlüssig, oder mittels anderer zwischengelagerter Zwischenmaterialien die Fliehkraftbeanspruchung aufnehmen.

Ebenso ist eine Bandage am Außenumfang des Kurzschlussringes zur Aufnahme der Fliehkräfte allein oder ergänzend denkbar.

Zudem ist vorstellbar, dass mit den oben angegebenen Verbindungstechnologien das stromführende Kupfer direkt in den erforderlichen Dimensionen - also beispielsweise radiale Höhe und/oder axiale Ausdehnung - additiv mit einer stoffschlüssigen Anbindung auf den Stahlring aufgebaut wird.

Die Erfindung erstreckt sich nicht nur auf allgemein bekannte dynamoelektrische rotatorische Käfigläufer-Asynchronmaschine, sondern beispielsweise auch auf Synchronmaschinen, die im Rotor einen Dämpferkäfig aufweisen.

Die Erfindung sowie weitere vorteilhafte Ausgestaltungen der Erfindung werden anhand prinzipiell dargestellter Ausführungsbeispiele näher erläutert, darin zeigen:
- FIG 1: prinzipieller Längsschnitt einer dynamoelektrischen Maschine,
- FIG 2: Detailansicht eines Kurzschlussläufers im Bereich des Kurzschlussringes,
- FIG 3: perspektivische Darstellung eines aufgeschnittenen Kurzschlussläufers,
- FIG 4 bis 6: Detailansicht eines Kurzschlussläufers im Bereich des Kurzschlussringes,
- FIG 7: beispielhafte Anwendung eines Kurzschlussläufers,
- FIG 8 bis 15: weitere Ausführungsformen der Kurzschlussringe.

Es sei angemerkt, dass sich Begriffe wie "axial", "radial", "tangential" etc. auf die in der jeweiligen Figur bzw. im jeweils beschriebenen Beispiel zum Einsatz kommende Achse 18 beziehen. Mit anderen Worten beziehen sich die Richtungen axial, radial, tangential stets auf eine Achse 18 des Rotors 10 und damit auf die entsprechende Symmetrieachse des Stators 2. Dabei beschreibt "axial" eine Richtung parallel zur Achse 18, "radial" beschreibt eine Richtung orthogonal zur Achse 18, auf diese zu oder auch von ihr weg, und "tangential" ist eine Richtung, die in konstantem radialem Abstand zur Achse 18 und bei konstanter Axialposition kreisförmig um die Achse 18 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor bzw. Kurzschlussläufer 10 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

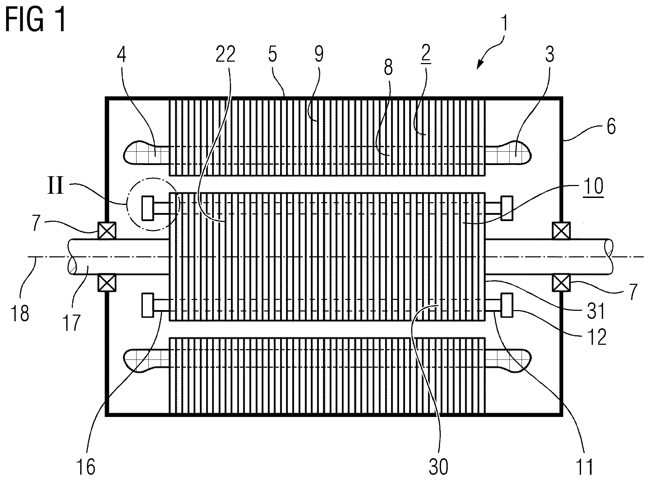

FIG 1 zeigt eine dynamoelektrische rotatorische Käfigläufer-Asynchronmaschine 1 mit einem Stator 2, der aus axial geschichteten Blechen 9 aufgebaut ist und zu einem Luftspalt 34 gerichtete Nuten 8 aufweist. In den Nuten 8 des Stators 2 ist ein Wicklungssystem 3 angeordnet, das an den Stirnseiten des Stators 2 Wickelköpfe 4 ausbildet. Von dem Luftspalt 34 radial beabstandet ist ein Kurzschlussläufer 10 drehfest mit einer Welle 17 verbunden. Die Lagerschilde 6 sind in einem Gehäuse 5 positioniert.

Der Kurzschlussläufer 10 weist axial geschichtete Bleche auf, die ein Blechpaket 22 bilden, das Nuten 30 aufweist, die zu dem Luftspalt weisen. In den Nuten 30 sind elektrische Leiter, insbesondere Leiterstäbe 11 angeordnet, wobei an den Stirnseiten 31 des Blechpakets 22 des Kurzschlussläufers 10 Kurzschlussringe 12 angeordnet sind. An den axialen Überständen 32 der Leiterstäbe 11 sind Kurzschlussringe 12 elektrisch kontaktiert.

Durch elektromagnetische Wechselwirkung des bestromten Wicklungssystems 3 des Stators 2 mit dem Kurzschlusskäfig (Leiterstäbe 11 mit Kurzschlussringen 12) des Kurzschlussläufers 10 wird der Kurzschlussläufer 10 um eine Achse 18 in Rotation versetzt.

Um auch die dynamoelektrische rotatorische Käfigläufer-Asynchronmaschine 1 für höhere Drehzahlen an einer Arbeitsmaschine, insbesondere ohne Getriebe auch im insbesondere höheren Leistungsbereich größer 1 MW einsetzen zu können, wird der Kurzschlussring 12, wie im Weiteren beschrieben und gezeigt, ausgestaltet.

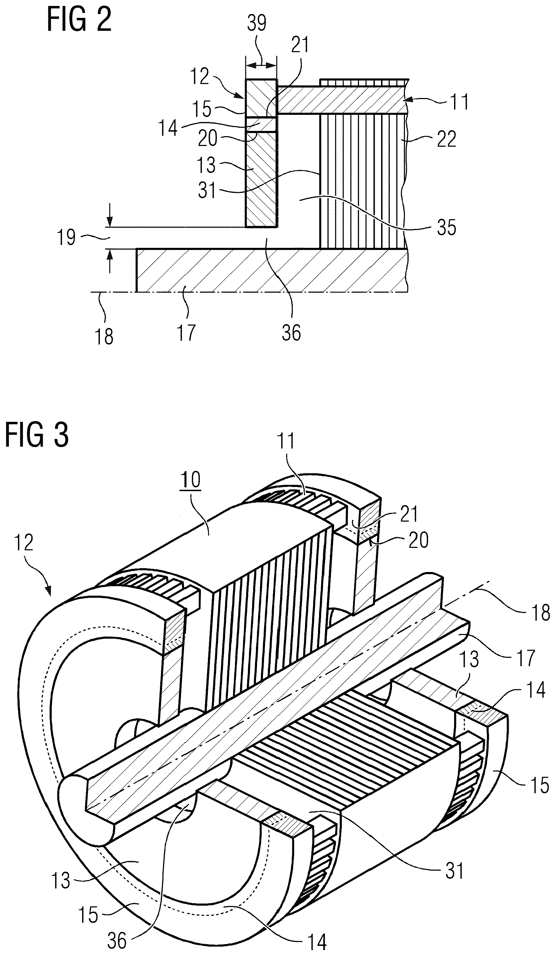

FIG 2 zeigt eine Detailansicht des Kurzschlussläufers 10 im Bereich des Kurzschlussringes 12. Der Kurzschlussring 12 ist dabei in radialer Richtung dreiteilig aufgebaut. Es gibt einen ersten Ring 13, der als Stahlring ausgeführt ist und radial sich daran anschließend einen zweiten Ring 14. Der erste und der zweite Ring sind mit einer ersten stoffschlüssigen Verbindung 20 miteinander verbunden. Radial an den zweiten Ring 14 schließt sich ein dritter Ring 15 an, der mittels einer zweiten Verbindung 21 stoffschlüssig mit dem zweiten Ring 14 verbunden ist. Der zweite und der dritte Ring 14, 15 sind vorzugsweise aus elektrisch vergleichsweise gut leitfähigem Material, wie Kupfer oder Aluminium oder dessen Legierungen ausgeführt. Der ersten Ring 13 ist als Stahlring ausgeführt, um die Fliehkräfte des Kurzschlussläufers 10, insbesondere die auf die Kurzschlussringe 12 wirkenden Fliehkräfte im Betrieb der dynamoelektrischen Maschine aufzunehmen.

Damit besteht der Kurzschlussläufer 10 in dieser Ausführungsform aus einem Hybridkurzschlussring aus drei Ringen, insbesondere drei konzentrischen Ringen 13, 14, 15 mit zumindest zwei unterschiedlichen Materialien, die jeweils durch verschiedene oder gleiche Technologien stoffschlüssig miteinander verbunden werden.

Der erste Ring 13 ist dabei von der Welle 17 beabstandet, um somit u.a. einem Luftstrom den Zugang in einen Zwischenraum 35, zwischen Kurzschlussring 12 und Stirnseite des Blechpakets 22 zu ermöglichen.

Je nach Abstand 19 kann dabei beispielsweise mehr oder weniger Luft zuströmen.

FIG 3 zeigt in einer perspektivischen Darstellung den Kurzschlussläufer 10, mit von dem Blechpaket 22 axial beabstandete Kurzschlussringen 12. Das Blechpaket 22 des Kurzschlussläufers 10 ist drehfest mit der Welle 17 verbunden. Durch den axialen Abstand 16 lassen sich die axialen Überstände 32 der Leiterstäbe 11 vergleichsweise einfach mit den Kurzschlussringen 12, insbesondere dem zweiten Ring 14 und/oder dem dritten Ring 15 elektrisch kontaktieren, beispielsweise durch einen Lötvorgang oder Schweißvorgang.

Ein derartiger Kurzschlussläufer 10 (also ein klassischer Kurzschlussläufer, wie aber auch ein Dämpferkäfig eines Synchron-läufers) weist beispielsweise folgende nicht zwangsläufig limitierende Dimensionen auf:
Länge von einem Kurzschlussring 12 zum anderen Kurzschlussring 12 bis zu 2m, bei einer axialen Ausdehnung der Welle von bis zu 6m und einem Durchmesser von bis zu 1,5m. Der Kurzschlussring 12 selbst hat dabei eine axiale Ausdehnung von bis zu 0,6m, insbesondere 0,3m.

Dabei werden die Leiterstäbe am zweiten und/oder dritten Ring 14, 15 auf der der Stirnseite 31 des Blechpakets 22 zugewandten Stirnseite des Kurzschlussringes 10 elektrisch kontaktiert.

Bei einem Lötvorgang kann gegebenenfalls eine umlaufende Rinne oder eine Kontaktausnehmung 38 am zweiten und/oder dritten Ring 14, 15 zur Kontaktierung von Kurzschlussring 12 und jeweiligem Leiterstab 11, beispielsweise als Lötwanne hilfreich sein.

Mit dem EXP-Welding-Prozess wird der zweite Ring 14 auf den ersten Ring 13 stoffschlüssig verbunden. Beispielsweise wird dabei ein äußeres Kupferrohr (zweiter Ring) mit einer maximalen radialen Materialstärke von ca. 15mm auf den ersten Ring 13, also den Stahlring sprengplattiert.

Beim Sprengplattieren wird der Sprengstoff als gleichmäßige, flächige Schicht aufgetragen. Die Zündung der Sprengladung(en) erfolgt entweder zeitgleich radial von außen oder minimal zeitversetzt, so dass eine Art Welle um den Außenumfang verläuft.

Es stellt sich auf jeden Fall eine feste Bindung der Plattierungspartner (erster Ring 13 und zweiter Ring 14) ein, ohne dass eine Gefügeveränderung der Materialien (beispielsweise Stahl und Kupfer) und eine ausgeprägte metallurgische Mischungs- und Wärmeeinflusszone auftritt, wie sie z.B. beim Auftragsschweißung bekannt ist.

Die aufgesprengte Plattierung des zweiten Ringes 14 widersteht chemischer Korrosion und/oder der Hitzeeinwirkung, der Stahlring trägt die mechanischen Belastungen, insbesondere Fliehkraftbeanspruchungen im Betrieb der dynamoelektrischen rotatorischen Maschine 1.

Der dritte Ring 15 wird durch die vorgenannten weiteren stoffschlüssigen Verfahren zumindest abschnittsweise auf den zweiten Ring 14 aufgebracht, um den Hybridkurzschlussring in dieser Ausführungsform aus drei konzentrischen Ringen 13, 14, 15 zu erhalten.

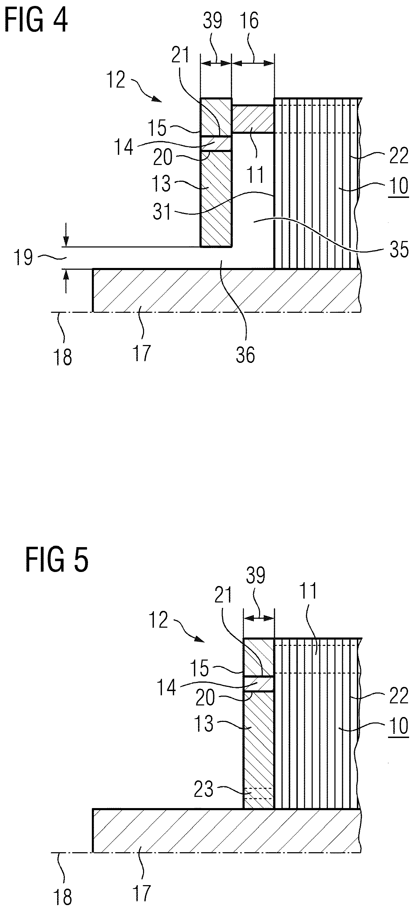

Die Figuren 4 bis 6 zeigen weitere Detailansichten eines Kurzschlussläufers 10 im Bereich des Kurzschlussringes 12. FIG 4 zeigt dabei drei konzentrische Ringe 13, 14, 15 mit axialer gleicher Ausdehnung und einem äquidistanten Abstand 16 von der Stirnseite 31. Der erste Ring 13 ist dabei von der Welle 17 radial beabstandet.

FIG 5 zeigt drei konzentrische Ringe 13, 14, 15 mit axialer gleicher Ausdehnung, wobei der Kurzschlussring 12 direkt an der Stirnseite 31 anliegt, also keinen Abstand 16 von der Stirnseite 31 aufweist. Der Stahlring (erster Ring 13) ist dabei auf der Welle positioniert und weist axiale Ausnehmungen 23 auf.

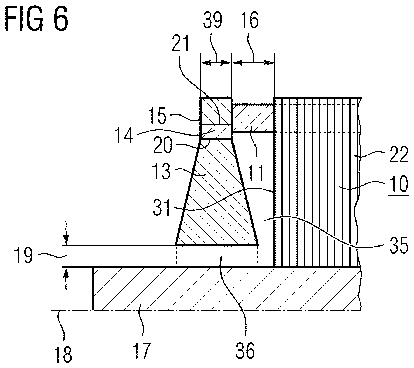

Der Kurzschlussring 12 nach FIG 6 unterscheidet sich von dem Kurzschlussring nach FIG 4 lediglich durch die Ausgestaltung des ersten Ringes 13, der im Querschnitt betrachtet trapezförmig ausgeführt ist, um die Fliehkräfte besser aufnehmen zu können.

Dabei ist jeweils der zweite Ring 14 mittels eines Sprengplattierungsprozesses mit dem ersten Ring 13 stoffschlüssig verbunden.

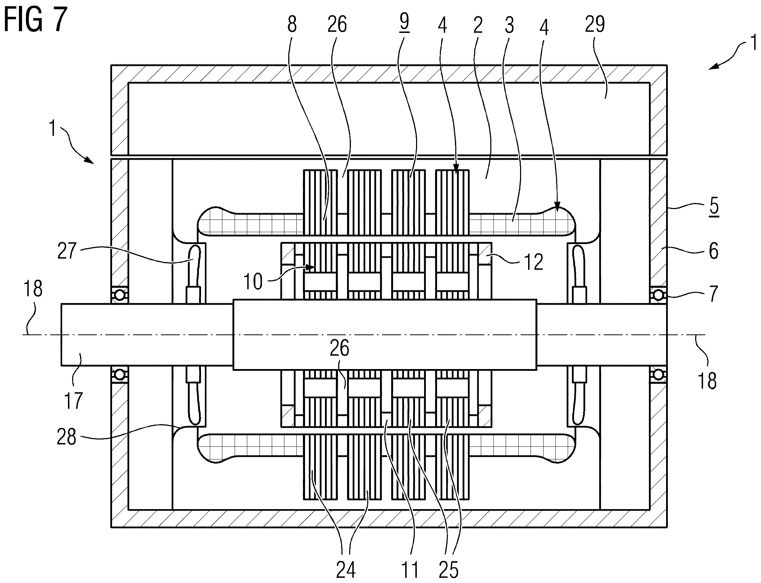

FIG 7 zeigt eine weitere dynamoelektrische Maschine 1, die für höhere Leistungen ausgelegt ist, indem beispielsweise sowohl Stator 2 als auch Kurzschlussläufer 10 mittels Teilblechpaketen 24, 25 aufgebaut sind. Des Weiteren befinden sich radial unter den Wickelköpfen 4 ein Lüfter 27, um eine dementsprechende Kühlleistung bereitstellen zu können. Außerdem können auf dem Gehäuse 5 unterschiedlichste Arten von Aufsatzkühlern 29 in Form von Röhrenkühlern oder Plattenkühlern vorgesehen werden.

Grundsätzlich wird durch die genannten Verfahren eine stabile Bindung der einzelnen Ringe 13, 14, 15 innerhalb des Kurzschlussringes 12 geschaffen. Durch diese stabile Bindung wird die Widerstandskraft des Kurzschlussringes 12 gegenüber Fliehkräften deutlich erhöht und damit der Einsatz des Kurzschlussläufers 10 in dynamoelektrischen Maschinen 1 auch für höhere Drehzahlen bei nur geringem Material- und Fertigungsaufwand ermöglicht.

Es ist darauf hinzuweisen, dass die Erfindung in gleicher Weise auch bei einem massiven Läuferkörper aus Stahl als magnetisch leitfähigem Körper angewandt werden kann.

Der hochfeste erste Ring 13 übernimmt die Fliehkraftaufnahme im Betrieb der dynamoelektrischen Maschine 1, insbesondere Käfigläufer Asynchronmaschine, so dass hohe Umfangsgeschwindigkeit des Kurzschlussläufers 10 und damit auch des oder der Stromringe der Kurzschlussringe 12 möglich sind. Dies kann sogar zum Entfall von sonst notwendigen Getrieben führen, was zu wesentlich kompakteren Anlagen führt.

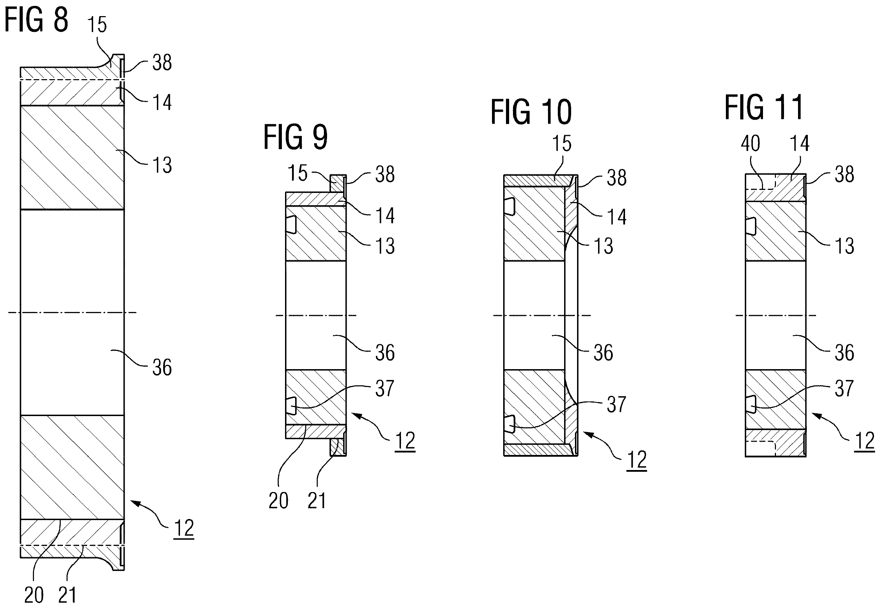

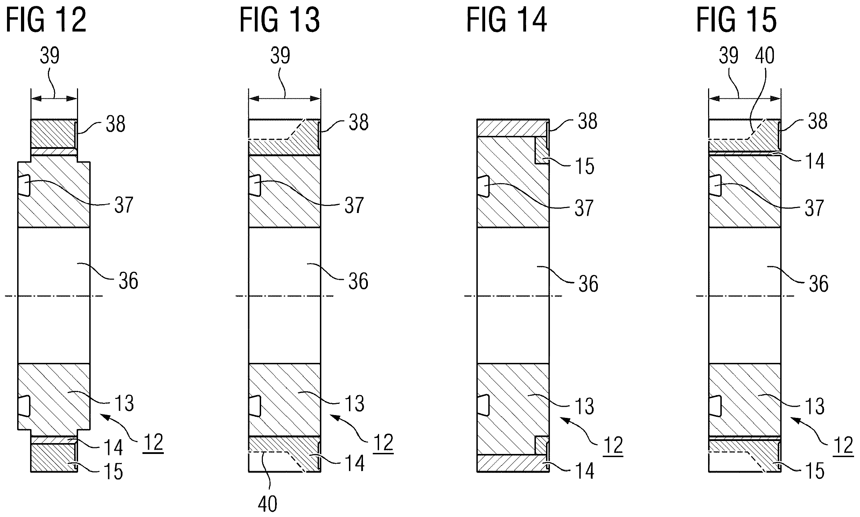

Figuren 8 bis 15 zeigen beispielshafte mögliche Ausführungsformen von Kurzschlussringen 12. Sämtliche Ausführungsformen zeigen eine Durchstecköffnung 36 des Stahlrings (ersten Rings 13), die eine Welle 17 mit einem radialen Abstand 19 umfassen, beispielsweise wie in FIG 2 oder FIG 3 oder, wie auch in FIG 5 gezeigt, der Kurzschlussring 12, insbesondere der erste Ring 13 mit seiner inneren Mantelfläche direkt an der Welle 17 anliegt.

Des Weiteren zeigen diese Ausführungsformen, dass die axialen Ausdehnungen 39 der einzelnen Ringe 13, 14, 15 unterschiedlich ausgeführt sein können.

Des Weiteren sind an einer Stirnseite des Kurzschlussringes 12, insbesondere am ersten Ring 13 Wuchtnuten 37 vorgesehen, die zum nachträglichen Wuchten des Kurzschlussläufers 10 geeignet sind. Die Wuchtnuten 37 verlaufen im Wesentlichen äquidistant um die Achse 18 auf der einem Blechpaket des Kurzschlussläufers 12 abgewandten Seite.

Auf dem ersten Ring 13 (Stahlring) ist ein elektrisch leitfähiger Ring 14, wie oben bereits ausgeführt angeordnet. Dieser weist auf der den Blechpaket des Kurzschlussläufers 12 zugewandten Seite Kontaktausnehmungen 38 auf, um dort die jeweiligen Leiterstäbe 11 mit dem Kurzschlussring 12 elektrisch zu kontaktieren.

Die Kontaktausnehmungen 38 sind nur an einem Ring 14 vorhanden oder - wenn zwei elektrisch leitfähige Ringe vorhanden sind - ggf. auch auf beide elektrisch leitfähige Ringe 14, 15 verteilt, wie dies beispielsweise in FIG 8, 9 und FIG 14 dargestellt ist.

Des Weiteren können insbesondere die leitfähigen Ringe 14, 15, unterschiedliche radiale und/oder axiale Ausdehnungen aufweisen, dies führt dann zu einem profilierten Verlauf 40 vor allem der äußeren Mantelfläche des Kurzschlussringes gemäß FIG 8, 9, 11, 13, und 15 und/oder einer Stirnseite des Kurzschlussrings 12.

Wie insbesondere FIG 10 zeigt, sind die Kontaktflächen von zweitem und drittem Ring 14, 15 aufgrund ihrer Anordnung am ersten Ring 13 (beispielsweise Stahlring) mit lediglich einer vergleichsweise geringen Kontaktfläche 33 ausgestattet. Die Kontaktausnehmungen 38 zur Kontaktierung von Kurzschlussring 12 und jeweiligem Leiterstab 11, beispielsweise als Lötwanne, sind demnach auch nur dem zweiten Ring 14 zugewiesen.

Eine dynamoelektrischen Maschine 1 mit einem erfindungsgemäß ausgestatteten Kurzschlussläufer 10 wird bei verschiedensten Anwendungen, insbesondere im MW-Bereich eingesetzt. Vorzugsweise im industriellen Umfeld der Öl- und Gasindustrie, der Nahrungsmittelindustrie, bei Produktionsmaschinen beispielsweise als Lüfter, Kompressoren, Verdichter und/oder Pumpen - vor allem im Hochdrehzahlbereich n > 3000U/min.

## Patentansprüche

1. Verfahren zur Herstellung eines Kurzschlussläufers (10) einer dynamoelektrischen Maschine (1), insbesondere einer Asynchronmaschine durch folgende Schritte:
- Drehfestes Positionieren eines zylindrischen magnetisch leitfähigen Körpers, insbesondere eines Blechpaketes (22), mit am äußeren Umfang versehenen im Wesentlichen axial verlaufenden Nuten (30), auf einer Welle (17),
- Einsetzen von Leiterstäben (11) in die Nuten (30), derart, dass sich an den beiden Stirnseiten (31) des zylindrischen magnetisch leitfähigen Körpers axiale Überstände (32) der Leiterstäbe (11) ergeben,
- koaxiales Positionieren eines, in radialer Richtung zumindest zweiteiligen, insbesondere dreiteiligen Kurzschlussringes (12) auf der Welle (17) in jeweils einem vorgebbaren axialen Abstand (16) zur Stirnseite (31) des magnetisch leitfähigen Körpers,
- elektrisches Kontaktieren des Kurzschlussringes (12) mit den jeweils aus den Stirnseiten (31) des magnetisch leitfähigen Körpers ragenden axialen Überständen (32) der Leiterstäbe (11).

2. Verfahren nach Anspruch 1, **dadurch gekenn** - **zeichnet** , dass der mehrteilige Kurzschlussring (12) einen ersten Ring (13) aus hochfestem Material, insbesondere ein Stahlring aufweist, einen zweiten Ring (14) aus einem ersten elektrisch leitfähigen Material, insbesondere Kupfer aufweist, und optional einen dritten Ring (15) aus einem zweiten elektrisch leitfähigen Material aufweist,
wobei, auf die äußere Umfangsfläche des ersten Rings (13) mittels eines ersten stoffschlüssig verbindenden Verfahrens, insbesondere mittels Sprengplattierens der zweite Ring (14), insbesondere abschnittsweise stoffschlüssig verbunden wird.

3. Verfahren nach Anspruch 2, **dadurch gekenn** - **zeichnet** , dass der zweite Ring (14) mittels eines weiteren stoffschlüssig verbindenden Verfahrens mit dem dritten Ring (15), insbesondere abschnittsweise stoffschlüssig verbunden wird.

4. Verfahren nach einem der vorhergehenden Ansprüche,
**dadurch gekennzeichnet, dass** der zweite und dritte Ring (14,15) aus dem gleichen elektrisch leitfähigen Material ist.

5. Verfahren nach einem der vorhergehenden Ansprüche,
**dadurch gekennzeichnet, dass** die stoffschlüssig verbindenden Verfahren (20,21) unterschiedlich sind.

6. Verfahren nach einem der vorhergehenden Ansprüche,
**dadurch gekennzeichnet, dass** das stoffschlüssige Verfahren zur Verbindung von zweitem und drittem Ring (14,15) als zumindest eine einseitige I-Naht ausgeführt wird.

7. Verfahren nach einem der vorhergehenden Ansprüche,
**dadurch gekennzeichnet , dass** die drei Ringe (13,14,15) als konzentrische Ringe mit annähernd gleicher axialer Ausdehnung ausgebildet werden.

8. Verfahren nach einem der vorhergehenden Ansprüche,
**dadurch gekennzeichnet , dass** zumindest die elektrisch leitenden Ringe (14,15), insbesondere die beiden elektrisch leitenden Ringe des Kurzschlussringes (12) äquidistant von der Stirnseite (31) des zylindrischen magnetisch leitfähigen Körpers beabstandet werden.

9. Verfahren nach einem der vorhergehenden Ansprüche,
**dadurch gekennzeichnet , dass** der erste Ring (13) des mehrteiligen Kurzschlussringes (12) radial innen angeordnet ist und optional axial verlaufende Ausnehmungen (23) im Bereich der Welle (17) aufweist.

10. Verfahren nach einem der vorhergehenden Ansprüche,
**dadurch gekennzeichnet , dass** für die stoffschlüssig verbindenden Verfahren je nach Anforderungen u.a. an den Kurzschlussring (12) aus folgenden additiven Fertigungsverfahren eines oder mehrere gewählt werden:
Methode des "electro beam welding"
Methode des "wire feed electron beam additive manufacturing",
Methode des "cold spray additive manufacturing",
Methode des "Wire/powder feed Laser metal deposition",
Methode des "Friction deposition additive manufacturing" oder das "Rotary friction welding".

11. Verfahren nach einem der vorhergehenden Ansprüche,
**dadurch gekennzeichnet , dass** als Material für die Kurzschlussringe (12) Kupfer oder Aluminium oder deren Legierungen vorgesehen sind.

12. Kurzschlussläufer (10) einer dynamoelektrischen Maschine (1), insbesondere einer Asynchronmaschine hergestellt nach einem der Ansprüche 1 bis 11, **dadurch gekenn** - **zeichnet** , dass die Kurzschlussringe (12) von dem magnetisch leitfähigen zylindrischen Körper, insbesondere dem Blechpaket (22) axial beabstandet sind, insbesondere äquidistant beabstandet sind, so dass die Kurzschlussringe (12) mit dem magnetisch leitfähigen zylindrischen Körper keine geschlossene Mantelfläche bilden.

13. Dynamoelektrische Maschine (1), insbesondere Asynchronmaschine mit einem Kurzschlussläufer (10) nach Anspruch 12,
**dadurch gekennzeichnet , dass** die dynamoelektrische Maschine (1) für Drehzahlen größer 5000 U/min geeignet ist.

14. Verwendung einer dynamoelektrischen Maschine (1) nach Anspruch 13 vorzugsweise im industriellen Umfeld der Öl- und Gasindustrie, der Nahrungsmittelindustrie, der Produktionsmaschinen beispielsweise als Lüfter, Kompressoren, Verdichter und/oder Pumpen, insbesondere für Drehzahlen größer 3000U/min.
